Europäisches Patentamt

European Patent Office

Office européen des brevets

(19)

(11) Veröffentlichungsnummer: **0 290 880 B1**

(12) **EUROPÄISCHE PATENTSCHRIFT**

(45) Veröffentlichungstag der Patentschrift: **08.07.92**

(21) Anmeldenummer: **88106863.9**

(22) Anmeldetag: **29.04.88**

(51) Int. Cl.⁵: **G01G 3/14**, G01G 21/18

(30) Priorität: **09.05.87 DE 3715572**

(43) Veröffentlichungstag der Anmeldung:
**17.11.88 Patentblatt 88/46**

(45) Bekanntmachung des Hinweises auf die Patenterteilung:
**08.07.92 Patentblatt 92/28**

(84) Benannte Vertragsstaaten:
**AT DE ES FR GB IT NL SE**

(56) Entgegenhaltungen:
EP-A- 0 151 949
DE-A- 2 938 507
DE-A- 3 622 349
FR-A- 2 425 061
US-A- 3 512 595

WAGEN + DOSIEREN, Band 16, Nr. 1, Februar 1985, Seiten 10-14, Zurich, CH; R. HELLWIG: "Fehlerhafter Einbau - Auswirkungen auf die Messgenauigkeit von Dehnungsmessstreifen"

(73) Patentinhaber: **Bizerba-Werke Wilhelm Kraut GmbH & Co. KG.**
**Wilhelm-Kraut-Strasse 41**
**W-7460 Balingen 1(DE)**

(72) Erfinder: **Kraft, Horst**
**Richard-Wagner-Strasse 1**
**W-7460 Balingen-Frommern(DE)**

(74) Vertreter: **Griessbach, Dieter, Dr.**
**Höger, Stellrecht + Partner Uhlandstrasse 14 c**
**W-7000 Stuttgart 1(DE)**

(54) **Elektromechanische Waage.**

EP 0 290 880 B1

## Beschreibung

Die Erfindung betrifft eine elektromechanische Waage nach dem Oberbegriff des Patentanspruchs 1.

Eine elektromechanische Waage dieser Art mit einem Biegestab ist aus US-A-3,512,595 bekannt. Bei dieser Waage sind die beiden Metallplatten des Metall-Elastomer-Elements fest mit dem Biegestab bzw. der Lastplatte verschraubt. Eine leichte Abnahme und Wiederaufsetzung der Wägeplatte ist daher nicht ohne weiteres möglich.

Es ist Aufgabe der Erfindung, eine gattungsgemäße Waage so weiterzubilden, daß bei möglichst kleiner Bauhöhe die Lastplatte leicht abgenommen und wieder aufgesetzt werden kann.

Die Aufgabe wird erfindungsgemäß durch die kennzeichnenden Merkmale des Patentanspruchs 1 gelöst.

Hierbei wird insbesondere der Vorteil erreicht, daß die z. B. als Wägebrücke ausgebildete Lastplatte zu Reparaturoder Reinigungszwecken problemlos abgehoben und wieder aufgesetzt werden kann.

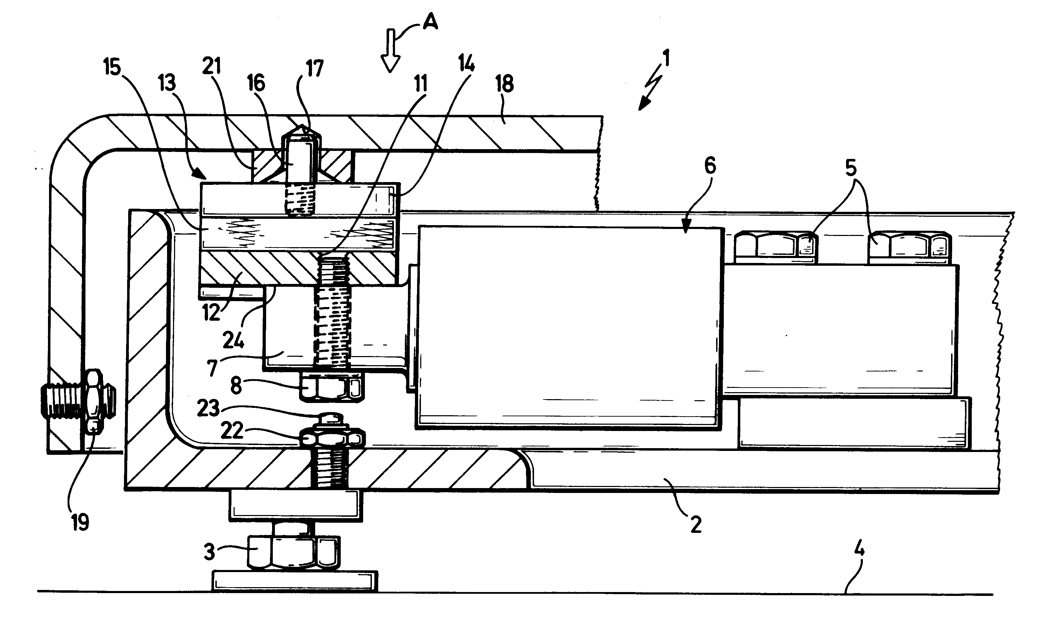

Die nachstehende Beschreibung bevorzugter Ausführungsformen der Erfindung dient im Zusammenhang mit beiliegender Zeichnung der weiteren Erläuterung. Die Zeichnung zeigt eine schematische Teilschnittansicht einer elektromechanischen Waage mit Biegestab und geringer Bauhöhe.

Bei der auf der Zeichnung schematisch in Teilansicht dargestellten elektromechanischen Waage 1 ist ein Waagengestell 2 mit Hilfe einer Nivellierschraube 3 in an sich bekannter Weise auf einer Unterlage 4, z. B. dem Erdboden ortsfest abgestützt. Das Waagengestell 2 ist beispielsweise als rechteckiger Rahmen ausgebildet, von dem die Zeichnung eine Teilansicht einer seiner vier Ecken zeigt. Im Waagengestell 2 ist mittels Schrauben 5 ein an sich bekannter Biegestab 6 einseitig und freitragend fest eingespannt, wobei ein Ende 7 des Biegestabes 6 frei in das Waagengestell ragt. Ausbildung und Anordnung des Biegestabes 6, von dem beispielsweise jeweils ein Exemplar an jeder Ecke des Waagengestells vorhanden ist, sind konventionell. Der Biegestab ist in herkömmlicher Weise mit Dehnungsmeßstreifen ausgerüstet, mit deren Hilfe elektrische, der eingeleiteten Wägekraft proportionale Meßsignale erzeugbar sind.

Auf dem freien Ende 7 des Biegestabes 6 ist mittels einer Schraube 8 eine untere Metallplatte 12 eines an sich bekannten Metall-Elastomer-Elements 13 fest angeschraubt. Das Element 13 umfaßt weiterhin eine obere Metallplatte 14, die zusammen mit der unteren Metallplatte 12 eine Schicht 15 aus einem elastomeren Material, beispielsweise Gummi oder Kunststoff zwischen sich einschließt, wobei die Schicht 15 in an sich bekannter Weise fest mit den Platten 12, 14 verbunden ist, so daß das aus den Teilen 12, 14 und 15 bestehende Element 13 ein einstückiges Bauteil ist.

In die obere Metallplatte 14 ist ein nach oben abstehender Zentrierstift 16 fest eingeschraubt, der mit seinem freien Ende in eine entsprechende Aussparung 17 einer das Waagengestell 2 überspannenden Lastplatte 18 formschlüssig eingreift. Die Lastplatte 18 weist seitlich angeordnete Anschlagschrauben 19 auf, die sich seitlich an das Waagengestell 2 anlegen können und hierdurch eine übermäßige seitliche Verschiebung der über das Metall-Elastomer-Element an den Biegestäben 6 abgestützten Lastplatte 18 relativ zum ortsfesten Waagengestell 2 verhindern. Die Aussparung 17 kann auf der Unterseite der Lastplatte 18 von einem konisch ausgebildeten Zentrierring 21 umgeben sein, der eine Einführung des Stiftes 16 in die Aussparung erleichtert. Der Zentrierstift 16 ermöglicht ein problemloses Abheben der Lastplatte 18 von den Biegestäben 6 sowie ein ebenso problemloses Wiederaufsetzen, wobei die Zentrierringe 21 das Eindringen der Zentrierstifte 16 in die Aussparungen 17 unterstützen.

Am Waagengestell 2 ist unterhalb der Schraube 8 eine mit Hilfe einer Kontermutter 22 einstellbare Anschlagschraube 23 vorgesehen, an welcher der Kopf der Schraube 8 bei übermäßiger Belastung des Biegestabes 6 anschlägt und hierdurch die Verbiegung des Stabes 6 begrenzt.

Das Element 13 wird vorzugsweise rotationssymmetrisch ausgebildet.

Die untere Metallplatte 12 weist eine an die Querschnittsform des freien Endes 7 des Biegestabes 6 angepaßt Ausnehmung 24 auf, die flächig unmittelbar auf dem Ende 7 des Biegestabes 6 aufsitzt. Die Befestigungsschraube 8 ist unmittelbar in eine Gewindebohrung 11 der Metallplatte 12 eingeschraubt und verbindet das Metall-Elastomer-Element 13 fest mit dem Biegestab. Durch die Ausnehmung 24 ist zugleich eine Sicherung des Elementes 13 gegen Verdrehen bei Montage oder seitlichen Belastungen (Querkräften) gewährleistet.

In der Zeichnung ist die Richtung der zu messenden Wägekraft durch den Pfeil A angedeutet. Bei Waagen der hier in Rede stehenden Art können zwei, drei oder vier Biegestäbe 6 mit Metall-Elastomer-Elementen 13 vorgesehen werden, obwohl bei Sonderausführungen auch an Waagen mit einem einzigen Biegestab gedacht werden kann.

Wie in der Zeichnung dargestellt, ist die Schraube 8 gegenüber dem Zentrierstift 16 in Längsachsrichtung des Biegestabes 6 versetzt.

Anstelle des Biegestabes 6 kann auch ein sogenannter "Scherstab" an sich bekannter Art verwendet werden. An Aufbau der Wirkungsweise der Waage ändert sich hierdurch nichts.

**Patentansprüche**

1.  Elektromechanische Waage (1) mit einem ortsfesten Waagengestell (2), mit einer relativ zum Waagengestell beweglichen Lastplatte (18) zur Aufnahme einer zu wägenden Last, mit wenigstens einer am Waagengestell befestigten Wägezelle zur Messung einer Wägekraft und mit einem zwischen der Lastplatte und der Wägezelle angeordneten Metall-Elastomer-Element (13) aus zwei Metallplatten (12, 14) und einer zwischen diesen liegenden Elastomerschicht (15) zur Einleitung der Wägekraft in die Wägezelle, wobei die Wägezelle ein einseitig am Waagengestell (2) eingespannter Biege- oder Scherstab (6) ist, und die eine Metallplatte (12) mit dem freien Ende (7) des Biegestabes (6) fest verschraubt ist,
    **dadurch gekennzeichnet, daß**
    die andere Metallplatte (14) durch einen Zentrierstift (16) mit der Lastplatte (18) formschlüssig verbunden ist, daß das freie Ende (7) des Biege- oder Scherstabes (6) in eine Ausnehmung (24) der benachbarten Metallplatte (12) formschlüssig eingreift, und daß eine Befestigungsschraube (8) zur Verbindung dieser Metallplatte (12) mit dem freien Ende (7) des Biege- oder Scherstabes (6) gegenüber dem Zentrierstift (16) in Längsrichtung des Biege- oder Scherstabes (6) versetzt ist.

2.  Waage nach Anspruch 1, dadurch gekennzeichnet, daß der Zentrierstift (16) in einen an der Lastplatte (18) vorgesehenen, konischen Zentrierring (21) eingreift.

**Claims**

1.  An electromechanical balance (1) comprising a fixedly located balance frame (2), a weighing plate (18) movable relative to the balance frame, for receiving a load to be weighed, at least one weighing cell fixed to the balance frame, for measuring a weighing force and a metal-elastomer element (13), arranged between the weighing plate and the weighing cell and consisting of two metal plates (12, 14) and a layer of elastomer (15) located therebetween, for applying the weighing forte to the weighing cell, wherein the weighing cell is a bending or shear rod (6) fixed at one side to the balance frame (2) and one metal plate (12) is permanently screwed to the free end (7) of the bending rod (6), characterized in that the other metal plate (14) is adapted in shape to be connected to the weighing plate (18) by means of a centering pin (16), the free end (7) of the bending or shear rod (6) is adapted in shape to engage in a recess (24) in the adjacent metal plate (12), and a fixing bolt (8) for connecting this metal plate (12) to the free end (7) of the bending or shear rod (6) is offset in the longitudinal direction of the bending or shear rod (6) relative to the centering pin (16).

2.  A balance according to claim 1, characterized in that the centering pin (16) engages in a conical centering ring (21) provided in the weighing plate (18).

**Revendications**

1.  Balance (1) électromécanique avec un bâti de balance (2) fixe, avec un plateau de charge (18) mobile relativement au bâti de balance pour la réception d'une charge à peser, avec au moins une cellule de pesage fixée au bâti de balance pour la mesure d'une force à peser et avec un élément métal-élastomère (13) disposé entre le plateau de charge et la cellule de pesage, constitué par deux plaques métalliques (12, 14) et une couche d'élastomère (15) placée entre ces deux plaques, pour la transmission de la force à peser à la cellule de pesage, dans laquelle la cellule de pesage est une tige de flexion ou de cisaillement (6) encastrée d'un côté dans le bâti de balance (2) et l'une des plaques métalliques (12) est solidement vissée à l'extrémité (7) libre de la tige de flexion (6), caractérisée en ce que la deuxième plaque métallique (14) est réunie par engagement de formes au plateau de charge (18) par l'intermédiaire d'une goupille de centrage (16), en ce que l'extrémité libre (7) de la tige de flexion ou de cisaillement (6) est introduite avec correspondance de formes dans un évidement (24) de la plaque métallique (12) voisine, et en ce qu'une vis de fixation (8) destinée à la liaison de cette plaque métallique (12) avec l'extrémité (7) libre de la tige de flexion ou de cisaillement (6) est décalée par rapport à la goupille de centrage (16) dans le sens longitudinal de la tige de flexion ou de cisaillement (6).

2.  Balance selon la revendication 1, caractérisée par le fait que la goupille de centrage (16) est engagée dans une bague de centrage (21) conique prévue sur le plateau de charge (18).